# EUROPÄISCHE PATENTSCHRIFT

(11) **EP 1 342 441 B1**
(45) Veröffentlichungstag und Bekanntmachung des Hinweises auf die Patenterteilung: **15.11.2006**
(21) Anmeldenummer: 02005416.9
(22) Anmeldetag: 08.03.2002
(51) Int. Cl.: A47J 27/092, A47J 36/38

(54) **Druckgargerät**
Pressure cooker
Appareil de cuisson sous pression

(43) Veröffentlichungstag der Anmeldung: 10.09.2003
(73) Patentinhaber: MKN Maschinenfabrik Kurt Neubauer GmbH & Co., 38300 Wolfenbüttel (DE)
(72) Erfinder: Huch, Theobald, 38302 Wolfenbüttel (DE); Helm, Peter, 38300 Wolfenbüttel (DE)
(74) Vertreter: Einsel, Martin

(56) Entgegenhaltungen:
- DE-A- 2 451 130
- DE-A- 2 632 916
- FR-A- 2 735 673
- GB-A- 2 217 629
- US-A- 2 555 230

## Beschreibung

Die Erfindung betrifft ein Druckgargerät für Kochgut mit einem Kochbehälter, einem Kochgerätedeckel und einem Garraum sowie mit Mitteln zum Abbau des Druckes im Garraum, bei dem im Kochgerätedeckel oder im Kochbehälter oberhalb des Kochgutes eine Öffnung des Garraums vorgesehen ist, bei dem die Öffnung über eine Rohrleitung mit einem Eingang eines Stellventils verbunden ist, und bei dem das Stellventil einen Ausgang aufweist.

Druckgargeräte bieten die Möglichkeit, Speisen unter Druck bei Luftabschluss zu garen. Diese Zubereitungsform für Speisen ermöglicht eine besonders schonende und auch schnelle Form der Produktzubereitung. Solche Druckgargeräte gibt es sowohl für Anwendungen in Haushalten, als auch als Großküchengerät.

Mehrere Gerätetypen dieser Druckgargeräte, auch als Druckgarer bezeichnet, sind am Markt verfügbar. Dazu gehören Druckgarbraisieren, bei denen die Zubereitung der Speisen direkt in einem Braisièrtigel erfolgt, Druckkochkessel, bei denen die Zubereitung in einem Kesselbehälter erfolgt, und Dampfgarer, bei denen die Zubereitung der Speisen in hierfür vorgesehenen Gastronorm-Behältern erfolgt. Diese Gastronorm-Behälter können aber auch zusätzlich bei den beiden erstgenannten Typen eingesetzt werden.

Bei allen Druckgargeräten muss nach dem Abschluss des Garprozesses, der wie erwähnt unter Druck stattgefunden hat, dieser Druck im Garraum auch wieder abgebaut werden. Dafür gibt es verschiedene Möglichkeiten. So ist es zum Beispiel bei Dampfgarern bekannt, Wasser als Kühlmedium direkt in den Garraum einzuspritzen. Durch die Abkühlung erfolgt automatisch der gewünschte Druckabbau. Ein in den Gastronorm-Behältern integrierter Ablauf ermöglicht das Abfließen des entstehenden unerwünschten Kondensates. Nachteilig ist der entstehende Wasserverbrauch und die durch das Abfließen des Kondensates entstehenden Verluste und Abwässer.

Aus der DE 24 51 130 A1 ist zum Druckabbau ein mit dem Garraum verbindbarer Dampfkondensator bekannt. Über ein Druckablassventil kann der Dampf in einen Druckablassraum geführt werden, der über eine wärmeisolierende Schicht von den anderen Gehäuseteilen des Druckgargerätes getrennt ist. Hierzu muss ein druckdichter doppelwandiger Mantel verwendet werden.

Aus der US-PS 2,555,230 ist es bekannt, beispielsweise Einkochgläser in einem größeren Kochbehälter einzustellen und dort zu konservieren. Dazu wird Dampf in den größeren Kochbehälter eingespeist. Zum Abkühlen wird Kühlflüssigkeit in den Kochbehälter eingeführt und so der dort vorhandene Dampf kondensiert.

Ein anderes bekanntes Druckabbauverfahren ist eine Deckelkühlung. Dabei wird die Deckelinnenseite als Kühlfläche ausgeführt. Zum Druckabbau wird diese von Kaltwasser durchströmt. Hierdurch erfolgt der Energieentzug durch Kondensation aus dem Kochbehälter.

Bekannt ist auch eine Mantelkühlung. Hierbei wird der Kochbehältermantel als Kühlfläche ausgeführt. Zum Druckabbau wird hier der Kochbehältermantel von Kaltwasser durchströmt. Hier erfolgt der Energieentzug aus dem Kochbehälter über das Kochprodukt, welches die Wandung des Kochbehältermantels kontaktiert.

Diese beiden Druckabbauverfahren besitzen den Vorteil, dass keine zusätzlichen Wassermengen in den Garraum geführt werden. Andererseits verlangsamt sich der Druckabbauprozess aufgrund des schlechteren Wärmeüberganges.

Aufgabe der Erfindung ist es demgegenüber, ein verbessertes Druckabbauverfahren bei Druckgargeräten vorzuschlagen.

Diese Aufgabe wird bei einem gattungsgemäßen Druckgargerät dadurch gelöst, dass dem Stellventil eine Wassereinspritzung zugeordnet ist, über die Wasser in den aus dem Garraum über das Stellventil entweichenden Dampf einspritzbar ist.

Bevorzugt ist die Öffnung an der höchsten Stelle im Kochgerätedeckel angeordnet, also möglichst weit oberhalb des Kochgutes. Die Öffnung oberhalb des Kochgutes ist über eine bevorzugt glatte Rohrleitung mit einem Stellventil verbunden. Bevorzugt hinter diesem Stellventil ist eine Wassereinspritzung angeordnet.

In bevorzugten Ausführungsformen ist darüber hinaus vorgesehen, dass ein Sensor zur kontinuierlichen Druckmessung und/oder auch alternativ zur kontinuierlichen Temperaturmessung in Verbindung mit dem Kochraum beziehungsweise Garraum angeordnet ist.

Der erfindungsgemäße Aufbau arbeitet wie folgt: Mit der Beendigung des Kochprozesses wird der Druckabbauprozess eingeleitet. Hierzu wird der Druck aus dem Garraum kontrolliert über die im Kochgerätedeckel vorhandene Öffnung mittels nachgeschaltetem Stellventil abgebaut.

Das Öffnen des Stellventils erfolgt bevorzugt in Abhängigkeit des im Garraum vorhandenen Druckes oder alternativ der gemessenen Temperatur, die über den integrierten Sensor ermittelt wird.

Die nach dem Stellventil angeordnete Wassereinspritzung führt zu einer kontrollierten Kondensation des Dampfes in diesem Bereich. Dies kann gegebenenfalls auch temperaturgeregelt erfolgen. Durch die Wassereinspritzung in den Dampf ist gewährleistet, dass die Austrittstemperaturen des entstehenden Kondensates unter 80 °C liegen.

Es kann auch vorgesehen werden, mittels einer zusätzlichen Funktionstaste die Möglichkeit eines beschleunigten Druckabbaus anzubieten. Diese Funktionstaste ist in der elektronischen Regelung integriert. Der Benutzer des Gerätes hat hierdurch die Möglichkeit, den Druckabbau auf Wunsch produktabhängig im Kochprozess eingebunden oder auch manuell per Tastendruck bei Prozessunterbrechung oder Prozessende beschleunigt auszuführen. Bei Wahl dieser Möglichkeit wird dann das Stellventil komplett geöffnet.

Von besonderem Vorteil ist es, dass erfindungsgemäß ein Druckabbau in mehreren Stufen frei wählbar möglich ist. Bereits bei der Integration von wenigstens zwei Stufen wird sowohl ein geregelter Druckabbau, abhängig vom Druck oder von der Temperatur, möglich, bei dem der Druck im Garraum produktschonend abgebaut wird, oder aber auch ein gesteuerter Druckabbau, der frei vom Benutzer wählbar ist.

Für den gesteuerten Druckabbau sind auch eine Reihe weiterer Unterteilungen denkbar, die in den Druckabbauprozess integriert werden können. Unterschiedlichste Druckabbaugeschwindigkeiten können auf diese Weise realisiert werden.

Dies ist zum Beispiel dann von Vorteil, wenn besonders empfindliche Speisen, wie beispielsweise Blumenkohl, in dem Gerät zubereitet werden sollen, bei denen ein schonender, langsamer Druckabbau von Vorteil für die Produktqualität ist, während bei unempfindlicheren Produkten, wie beispielsweise Fleisch, ein wesentlich schnellerer Druckabbau und damit eine Verkürzung des Zubereitungsprozesses möglich ist.

Von besonderem Vorteil ist es ferner, dass der Energieverbrauch im Vergleich zum Stand der Technik verringert wird. Durch den deutlich besseren Wärmeübergang wird auch wesentlich weniger Kühlwasser benötigt. Da die Wassereinspritzung direkt in den Dampf hinein erfolgt, ist anders als bei den meisten bisherigen Druckabbauverfahren kein zusätzlicher Wärmeübergang über Kühlflächen oder dergleichen erforderlich. Es muss auch keine Temperatur vom Produkt über die Kochbehälterwandung zum Kühlmedium weitergeleitet werden.

Ebenso wenig ist es erforderlich, Wasser direkt in den Garraum zu geben. Dort besteht entweder die Gefahr, dass dieses Wasser in Spritzern oder auch sonst unerwünscht auf die Speisen gelangt oder aber es muss kompliziert und kostenaufwendig Vorsorge dafür getroffen werden, dass genau dies nicht geschieht. Erfindungsgemäß aber gelangt dort überhaupt kein Wasser hinein, muss also auch nicht abgeschirmt werden und fällt auch nicht am Ausgang an.

Der Zeitbedarf lässt sich ebenfalls optimieren. Die Energie wird direkt ohne Verzögerung abgebaut.

Außerdem ist kein Weichwasseranschluss erforderlich. Es ist möglich, das gesamte Wasserleitungssystem mit glatten, großen Querschnitten auszuführen.

Da keine engen Kühlkanäle benötigt werden, entsteht auch kein Verkalkungsproblem.

Schließlich bleibt nach dem Druckabbauprozess nicht nur kein eingespritztes Wasser zurück, sondem es fällt i Garraum auch keine freie Kondensatmenge an, die dem Produkt untergerührt oder anderweitig entsorgt werden muss.

Anders als bei einem Druckabbau mittels Direkteinspritzung von Kühlmedium in den Garraum entsteht auch ein Zeitgewinn. Dort muss nämlich bisher ein Siphon am Ausgang vorgesehen werden, der natürlich erst dann geöffnet werden kann, wenn der Druck auch abgebaut ist. Auch die gelegentlich auftretenden Schläge und Geräusche bei plötzlichem Druckabbau können erfindungsgemäß durch die wesentlich bessere Steuerung vermieden werden.

Im Folgenden wird der Anhand der Zeichnung ein Ausführungsbeispiel der Erfindung näher dargestellt. Es zeigt:

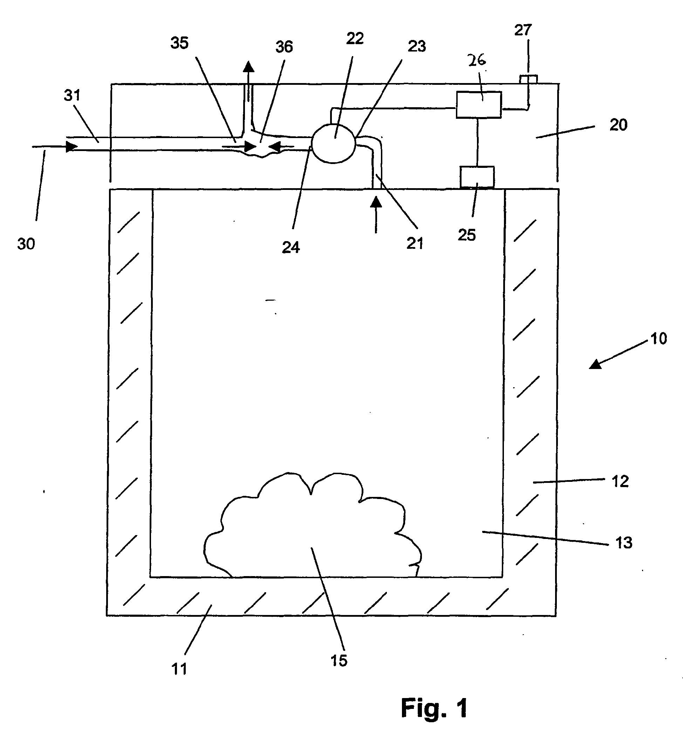

- **Figur 1**: eine schematische Darstellung eines Druckgargerätes nach der Erfindung.

Ein erfindungsgemäßes, rein schematisch in der **Figur 1** dargestelltes Druckgargerät besitzt einen Kochbehälter 10 mit einem Boden 11 und einem umlaufenden Mantel 12. Der Mantel 12 kann zylindrisch oder quadratisch, rechteckig oder auch anders geformt sein.

In dem Kochbehälter ist ebenfalls schematisch eine Speise 15 dargestellt, die zubereitet werden soll, beispielsweise Blumenkohl. Der Blumenkohl befindet sich in einer Atmosphäre im Innenraum 13, die Luft sein kann, aber auch zusätzlich mit Dampf angereichert sein könnte.

Etwaige zusätzliche Aggregate wie Heizung, Dampferzeuger, etc. sind hier nicht dargestellt.

Nach oben ist der Kochbehälter 10 durch einen abnehmbaren Kochgerätedeckel 20 abgeschlossen. Möglich ist es auch, die Öffnung zum Einfüllen von Speisen türartig vorzusehen.

In dem Kochgerätedeckel 20 ist nun bevorzugt an seiner höchsten Stelle eine Öffnung 21 vorgesehen. Diese Öffnung 21 führt zu einem Stellventil 22, das während des Kochprozesses geschlossen ist. Das Stellventil 22 besitzt einen Eingang 23 und einen Ausgang 24.

Ferner ist ein Sensor 25 vorgesehen, der den im Garraum 13 vorhandenen Druck und/oder die dort vorhandene Temperatur ermittelt. Diese Daten werden dann an eine Steuer- und Regelungseinrichtung 26 weitergegeben. Dieser Steuerungs- und Regelungseinrichtung 26 werden neben den Daten vom Sensor 25 zum Beispiel auch direkte Befehle von einer Taste 27 zugeführt und/oder auch weitere Befehle, die sich beispielsweise auf das zuzubereitende Speiseprodukt und die damit verbundenen Garprozesse beziehen.

Abhängig von den Daten des Sensors, der Taste 27 u.s.w. öffnet die Steuerungs- und Regelungseinrichtung 26 gegebenenfalls das Stellventil 22.

Dadurch kann dann nach der Durchführung des Gar- und Kochprozesses die im Garraum 13 befindliche, unter Überdruck stehende Luft durch die Öffnung 21, den Eingang 23 des Stellventils 22 und den Ausgang 24 des Stellventils 22 dieses passieren.

Dargestellt ist ferner eine Wasserzufuhr 30. Diese führt Wasser über eine Leitung 31 in den Deckel 20 des Gargerätes. Gegebenenfalls ebenso gesteuert (nicht dargestellt) wird dieses Wasser jetzt in einen Raum 36 eingespritzt, also in den aus dem Garraum 13 über das Stellventil 22 entweichenden Dampf.

### Bezugszeichenliste

- 10: Kochbehälter
- 11: Boden
- 12: Mantel
- 13: Garraum bzw. Innenraum

- 15: Speise oder Kochgut

- 20: Kochgerätedeckel
- 21: Öffnung
- 21a: Rohrleitung
- 22: Stellventil
- 23: Eingang des Stellventils
- 24: Ausgang des Stellventils
- 25: Sensor
- 26: Steuerungs- und Regelungseinrichtung
- 27: Leitung

- 30: Wasseranschluss oder Wasserzufuhr
- 31: Leitung

- 35: Wassereinspritzung
- 36: Raum

## Patentansprüche

1. Druckgargerät für Kochgut (15) mit einem Kochbehälter (10), einem Kochgerätedeckel (20) und einem Garraum (13) sowie mit Mitteln zum Abbau des Druckes im Garraum (13),
bei dem im Kochgerätedeckel (20) oder im Kochbehälter (10) oberhalb des Kochgutes (15) eine Öffnung (21) des Garraums (13) vorgesehen ist,
bei dem die Öffnung (21) über eine Rohrleitung (21 a) mit einem Eingang (23) eines Stellventils (22) verbunden ist, und
bei dem das Stellventil (22) einen Ausgang (24) aufweist,
**dadurch gekennzeichnet,**
**dass** dem Stellventil (22) eine Wassereinspritzung (35) zugeordnet ist, über die Wasser in den aus dem Garraum (13) über das Stellventil (22) entweichenden Dampf einspritzbar ist.

2. Druckgargerät nach Anspruch 1,
**dadurch gekennzeichnet,**
**dass** die Wassereinspritzung (35) dem Ausgang (24) des Stellventils (22) zugeordnet ist.

3. Druckgargerät nach einem der Ansprüche 1 oder 2,
**dadurch gekennzeichnet,**
**dass** für die Wassereinspritzung (35) ein dem Ausgang (24) des Stellventils (22) zugeordneter Raum (36) vorgesehen ist.

4. Druckgargerät nach Anspruch 3,
**dadurch gekennzeichnet,**
**dass** der Raum (36) mit einem Wasseranschluss (30) versehen ist.

5. Druckgargerät nach einem der vorhergehenden Ansprüche,
**dadurch gekennzeichnet,**
**dass** das Stellventil (22) in Abhängigkeit von Druck- und/oder Temperaturwerten im Garraum (13) verstellbar ist.

6. Druckgargerät nach einem der vorhergehenden Ansprüche,
**dadurch gekennzeichnet,**
**dass** dem Garraum (13) ein oder mehrere Sensoren (25) zur kontinuierlichen Druck- und/oder Temperaturmessung zugeordnet sind.

7. Druckgargerät nach einem der vorhergehenden Ansprüche,
**dadurch gekennzeichnet,**
**dass** ein Schalter (27) vorgesehen ist, der eine manuelle Auslösung des Druckabbauvorganges ansteuert.

8. Druckgargerät nach einem der vorhergehenden Ansprüche,
**dadurch gekennzeichnet,**
**dass** die Öffnung am oder benachbart zum höchsten Punkt des Garraums (13) vorgesehen ist.

9. Druckgargerät nach einem der vorhergehenden Ansprüche,
**dadurch gekennzeichnet,**
**dass** die Rohrleitung (21a) glatt ausgeführt ist und einen für Verkalkungen wenig empfindlichen relativ großen Querschnitt besitzt.

10. Druckgargerät nach einem der vorhergehenden Ansprüche,
**dadurch gekennzeichnet,**
**dass** eine Steuerungs- und Regelungseinrichtung (26) vorgesehen ist, die mehrere in ihrem Zeitablauf unterschiedliche, vom Benutzer wählbare, etwa kochgutabhängige, Druckabbauvorgänge ermöglicht.

## Claims

1. Pressure cooker for food (15) having a cooking container (10), a cooker lid (20) and a cooking chamber (13) and means for reducing the pressure in the cooking chamber (13),
wherein an opening (21) in the cooking chamber (13) is provided in the cooker lid (20) or in the cooking container (10) above the food (15),
wherein the opening (21) is connected via a pipeline (21a) to an input (23) of a control valve (22), and
wherein the control valve (22) comprises an output (24),
**characterised in that** the control valve (22) is allocated a water injection arrangement (35), by means of which water can be injected into the vapour escaping from the cooking chamber (13) via the control valve (22).

2. Pressure cooker as claimed in claim 1, **characterised in that** the water injection arrangement (35) is allocated to the output (24) of the control valve (22).

3. Pressure cooker as claimed in any one of claims 1 or 2, **characterised in that** a chamber (36) which is allocated to the output (24) of the control valve (22) is provided for the water injection arrangement (35).

4. Pressure cooker as claimed in claim 3, **characterised in that** the chamber (36) is provided with a water connection (30).

5. Pressure cooker as claimed in any one of the preceding claims, **characterised in that** the control valve (22) can be adjusted in dependence upon pressure and/or temperature values in the cooking chamber (13).

6. Pressure cooker as claimed in any one of the preceding claims, **characterised in that** the cooking chamber (13) is allocated one or several sensors (25) for continuous pressure and/or temperature measurement.

7. Pressure cooker as claimed in any one of the preceding claims, **characterised in that** a switch (27) is provided which controls a manual triggering of the pressure reducing procedure.

8. Pressure cooker as claimed in any one of the preceding claims, **characterised in that** the opening is provided at or adjacent to the highest point of the cooking chamber (13).

9. Pressure cooker as claimed in any one of the preceding claims, **characterised in that** the pipe line (21a) has a smooth design and comprises a relatively large cross-section which is not very sensitive to calcification.

10. Pressure cooker as claimed in any one of the preceding claims, **characterised in that** a control and regulating device (26) is provided which permits several pressure reducing procedures which have a different time sequence, can be selected by the user and which are dependent upon the food to be cooked.

## Revendications

1. Appareil de cuisson sous pression pour un aliment à cuire (15), comprenant un récipient de cuisson (10), un couvercle (20) et un espace de cuisson (13), ainsi que des moyens pour faire retomber la pression dans l'espace de cuisson (13), dans lequel le couvercle (20) ou le récipient de cuisson (10) comporte au-dessus de l'aliment à cuire (15) une ouverture (21) de l'espace de cuisson (13), dans lequel l'ouverture (21) est reliée par un tuyau (21a) à une entrée (23) d'une soupape de réglage (22), et dans lequel la soupape de réglage (22) présente une sortie (24), **caractérisé en ce qu'**une injection d'eau (35) est associée à la soupape de réglage (22), par le biais de laquelle de l'eau peut être injectée dans la vapeur s'échappant de l'espace de cuisson (13) via la soupape de réglage (22).

2. Appareil de cuisson sous pression selon la revendication 1, **caractérisé en ce que** l'injection d'eau (35) est associée à la sortie (24) de la soupape de réglage (22).

3. Appareil de cuisson sous pression selon la revendication 1 ou 2, **caractérisé en ce qu'**un espace (36) associé à la sortie (24) de la soupape de réglage (22) est prévu pour l'injection d'eau (35).

4. Appareil de cuisson sous pression selon la revendication 3, **caractérisé en ce que** l'espace (36) est doté d'une arrivée d'eau ou alimentation en eau (30).

5. Appareil de cuisson sous pression selon l'une des revendications précédentes, **caractérisé en ce que** la soupape de réglage (22) peut être réglée en fonction de valeurs de pression et/ou de température régnant dans l'espace de cuisson (13).

6. Appareil de cuisson sous pression selon l'une des revendications précédentes, **caractérisé en ce qu'**un ou plusieurs capteurs (25) sont associés à l'espace de cuisson (13) pour mesurer en permanence la pression et/ou la température.

7. Appareil de cuisson sous pression selon l'une des revendications précédentes, **caractérisé en ce qu'**un interrupteur ou actionneur (27) est prévu, qui commande un déclenchement manuel de la chute de la pression.

8. Appareil de cuisson sous pression selon l'une des revendications précédentes, **caractérisé en ce que** l'ouverture est prévue au point le plus haut de l'espace de cuisson (13), ou à proximité de celui-ci.

9. Appareil de cuisson sous pression selon l'une des revendications précédentes, **caractérisé en ce que** le tuyau (21a) est réalisé lisse et possède une section transversale relativement grande peu sensible aux dépôts de calcaire.

10. Appareil de cuisson sous pression selon l'une des revendications précédentes, **caractérisé en ce qu'**un dispositif de commande et de régulation (26) est prévu, qui met à disposition plusieurs processus pour faire retomber la pression dont le déroulement dans le temps varie et qui peuvent être sélectionnés par l'utilisateur, en fonction du type d'aliment à cuire.
